Europäisches Patentamt

European Patent Office

Office européen des brevets

(11) Veröffentlichungsnummer: **0 303 085**
**A2**

(12) **EUROPÄISCHE PATENTANMELDUNG**

(21) Anmeldenummer: **88111905.1**

(22) Anmeldetag: **23.07.88**

(51) Int. Cl.⁴: **F16L 1/02**

(30) Priorität: **10.08.87 DE 3726532**

(43) Veröffentlichungstag der Anmeldung:
**15.02.89 Patentblatt 89/07**

(84) Benannte Vertragsstaaten:
**AT BE CH DE ES FR GB GR IT LI LU NL SE**

(71) Anmelder: **Platzer Schwedenbau GmbH**
**Ernst-Leitz-Strasse 18**
**D-6056 Heusenstamm(DE)**

(72) Erfinder: **Iturriaga, Santiago**
**Herrnstrasse 32 a**
**D-6053 Obertshausen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Verfahren und Vorrichtung zur unterirdischen Verlegung von Heizungsrohren.**

(57) Die Vorrichtung besteht aus einem von einer Zugmaschine (1) gezogenen Rahmen (4), der auf die vorgegebene Arbeitstiefe einstellbar ist und eine vorgegebene Anzahl von parallel zueinander angeordneten Maulwurfanordnungen (10) mit sehr geringem Zugwiderstand trägt. Die zu verlegenden Heizungsrohre (40) werden vibrationsfrei mit den Maulwurfanordnungen (10) verbunden und in der vorgesehenen Verlegungstiefe mittels der Zugmaschine (1) durch das Erdreich gezogen.

Fig.1

EP 0 303 085 A2

Verfahren und Vorrichtung zur unterirdischen Verlegung von Heizungsrohren

Technisches Gebiet

Die Erfindung betrifft ein Verfahren und eine Vorrichtung zur unterirdischen Verlegung von Heizungsrohren.

Zugrundeliegender Stand der Technik

Bei der nachträglichen Verlegung von Heizungsrohren zum Beispiel auf Sportplätzen besteht das Problem, daß die Heizungsrohre nicht ohne umfangreiche Erdarbeiten verlegt werden können. Insbesondere bei Sportplätzen wird dadurch die Erdoberfläche, zum Beispiel eine bestehende Rasenfläche in einem solchen Umfang beeinträchtigt oder beschädigt, daß die Sportplätze für längere Zeit nicht benutzt werden können. Eine Verlegung der Erdarbeiten in die spielfreie Zeit ist praktisch nicht möglich, weil diese spielfreie Zeit in die Wintermonate fällt, in denen Frist die Erdarbeiten behindert oder gar unmöglich macht.

Offenbarung der Erfindung

Die Aufgabe der Erfindung besteht darin, ein Verfahren und eine Vorrichtung zur unterirdischen Verlegung von Heizungsrohren anzugeben, die unter minimaler Störung der Erdoberfläche, insbesondere bei Sportplätzen ohne Beeinträchtigung von Rasenflächen die Verlegung von Heizungsrohren mit einem minimalen Zeitaufwand ermöglichen.

Nach dem erfindungsgemäßen Verfahren wird diese Aufgabe dadurch gelöst, daß mindestens ein Heizungsrohr vibrationsfrei mit mindestens einer Maulwurfanordnung einer Zugvorrichtung verbunden wird, daß die mindestens eine Maulwurfanordnung auf eine vorbestimmte Verlegungstiefe des zugehörigen Heizungsrohres eingestellt wird und daß mittels der Zugvorrichtung die mindestens eine auf die Verlegungstiefe voreingestellte Maulwurfanordnung und das zugehörige Heizungsrohr mit einer Zugmaschine durch das Erdreich gezogen werden.

Die erfindungsgemäße Vorrichtung zu Lösung der gestellten Aufgabe ist gekennzeichnet durch eine an eine Zugmaschine ankoppelbare Zugvorrichtung mit mindestens einer Maulwurfanordnung, die vibrationsfrei mit einem Ende mindestens eines zu verlegenden Heizrohres verbindbar ist, und eine Tiefeneinstellvorrichtung zur Einstellung der mindestens einen Maulwurfanordnung auf die Verlegungstiefe des zugehörigen Heizungsrohres.

Kurze Beschreibung der Zeichnungen

Ein Ausführungsbeispiel der erfindungsgemäßen Vorrichtung ist in den Abbildungen dargestellt und wird nachfolgend anhand der Bezugszeichen im einzelnen erläutert und beschrieben. Es zeigen.

Fig. 1 eine schematische Seitenansicht der erfindungsgemäßen Vorrichtung;

Fig. 2 eine Ansicht der Zugvorrichtung bei der Vorrichtung nach Fig.1;

Fig. 3 eine Seitenansicht einer Maulwurfanordnung bei der Vorrichtung nach Fig1;

Fig. 4 eine Ansicht der Verbindungsmittel zwischen einem Heizungsrohr und der Maulwurfanordnung bei der Vorrichtung nach Fig.1; und

Fig. 5 eine schematische Teildarstellung eines Sportplatzes in Draufsicht in Verbindung mit dem erfindungsgemäßen Verfahren zur unterirdischen Verlegung von Heizungsrohren unter Verwendung der Vorrichtung nach Fig.1.

Bevorzugte Ausführungen der Erfindung

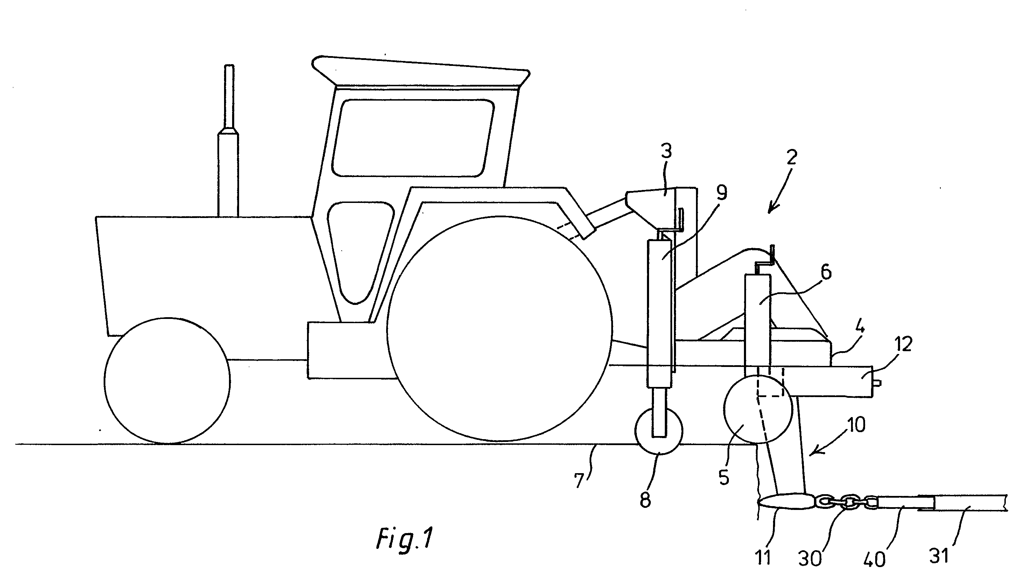

Fig.1 zeigt in einer schematischen Seitenansicht eine Zugmaschine 1, an die eine Zugvorrichtung 2 mit üblichen Verbindungsmitteln 3 angekoppelt ist. Ein Rahmen 4 der Zugvorrichtung 2 ist durch Räder 5 über eine Tiefeneinstellvorrichtung 6 auf der Erdoberfläche 7 abgestützt. An dem Rahmen 4 der Zugvorrichtung 2 ist eine übliche Vibrationsvorrichtung 12 vorgesehen.

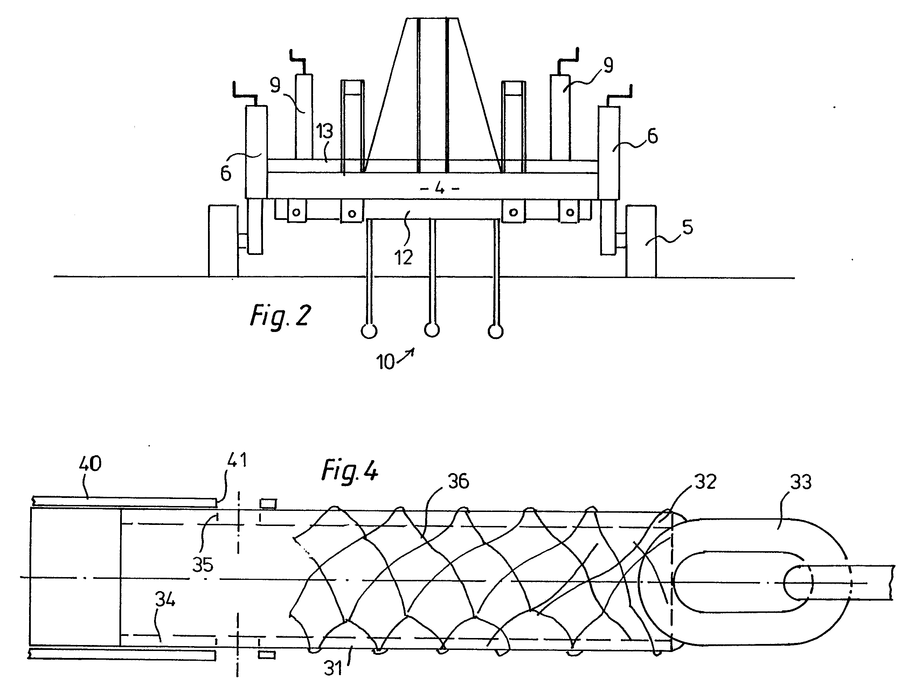

Der Rahmen 4 trägt mindestens eine nach unten verlaufende Maulwurfanordnung 10, die an ihrem unteren Ende vibrationsfrei mit einem Ende eines Heizungsrohres 40 verbunden ist. In Abhängigkeit von den jeweiligen Verlegungsbedingungen können an dem Rahmen 4 ein oder mehrere Maulwurfan ordnungen 10 parallel und im Abstand voneinander angeordnet sein. In dem dargestellten Ausführungsbeispiel, vgl. Fig.2, ist der Rahmen 4 mit drei parallelen Maulwurfanordnungen 10 versehen.

Weiterhin ist das dargestellte Ausführungsbeispiel der Zugvorrichtung 2 insbesondere zur unterirdischen Verlegung von Heizungsrohren 40 unter Rasenflächen ausgebildet. Dazu ist jede Maulwurfanordnung 10 ein vorlaufendes, die Rasenfläche durchschneidendes Schneidrad 8 zugeordnet, das mit einer tiefenverstellbaren Halterung 9 auf die vorgesehene Arbeitstiefe eingestellt werden kann.

Der Rahmen 4 ist in Fig.2 in einer Rückansicht dargestellt. Man erkennt die Tiefeneinstellvorrichtung 6. die an beiden Seiten des Rahmens 4 angreift und mechanisch z.B. mit einem Spindeltrieb, hydraulisch oder pneumatisch in üblicher Weise ausgebildet ist und daher nicht näher beschrieben wird. Drei Maulwurfanordnungen 10 sind parallel im Abstand zueinander angeordnet und an die Vibrations- oder Doppelvibrationsvorrichtung 12 angeschlossen. Die in dieser Abbildung nicht dargestellten Schneidräder sind an einem Träger 13 angeordnet, der durch die auf beiden Seiten des Rahmens 4 angeordneten tiefenverstellbaren Halterungen 9 auf die gewünschte Arbeitstiefe der Schneidräder eingestellt wird.

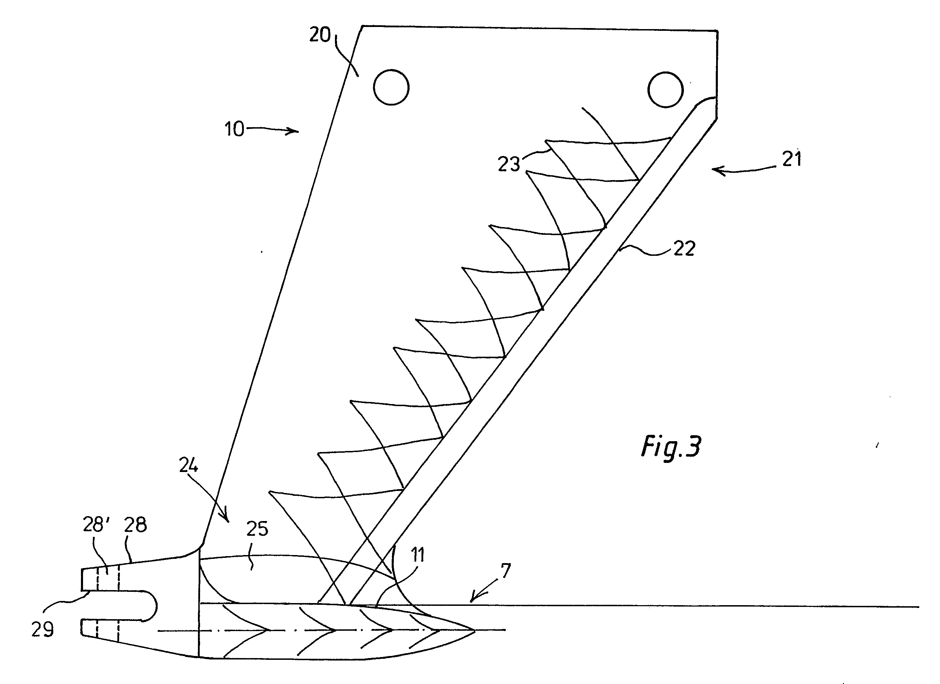

Fig. 3 zeigt im Detail eine Seitenansicht einer Maulwurfanordnung 10, die aus einem Maulwurfträger 20 und einem Maulwurfkörper 11 besteht. Der Maulwurfträger 20 wird am oberen Ende mit dem Rahmen 4 durch übliche Befestigungsmittel fest verbunden und erweitert sich vom Maulwurfkörper 11 zum oberen Ende. Der Maulwurfträger 20 verläuft, ausgehend vom Maulwurfkörper 11, in Laufrichtung unter einem Winkel nach vorn und oben und bildet so ein nach vorn und oben geneigtes Vorderteil 21 mit einer Schneidkante 22. Von der Schneidkante 22 erstrecken sich aufgeschweißte Abnutzungsstreifen 23 wenigstens über das Vorderteil 21.

An seinem unteren Ende 24 ist der Maulwurfträger 20 über gerundete Seitenteile 25 mit dem Maulwurfkörper 11 verbunden. An der in Laufrichtung rückwärtigen Seite des Maulwurfträgers 11 befindet sich auf der Höhe des Maulwurfträgers 11 ein Befestigungsteil 28 mit einer Ausnehmung 29 zur Aufnahme des Schäkels einer Kette, die mit dem Maulwurfkörper 11 verbunden ist. Der Schäkel wird mit einem Bolzen in einer Durchbohrung 28' des Befestigungsteils 28 befestigt.

Der Maulwurfträger 20 und der Maulwurfkörper 11 sind in der Weise gestaltet, daß während der Verlegung der Heizungsrohre 40 nur ein sehr geringer Zugwiderstand besteht. Dazu tragen beim Maulwurfträger 20 die nach vorn geneigte, sich in Laufrichtung über den Maulwurfkörper 11 hinaus erstreckende Anordnung in Verbindung mit der Schneidkante 22 bei, sowie die Ausbildung der gerundeten Seitenteile 25, die den Maulwurfträger 20 und den Maulwurfkörper 11 miteinander verbinden.

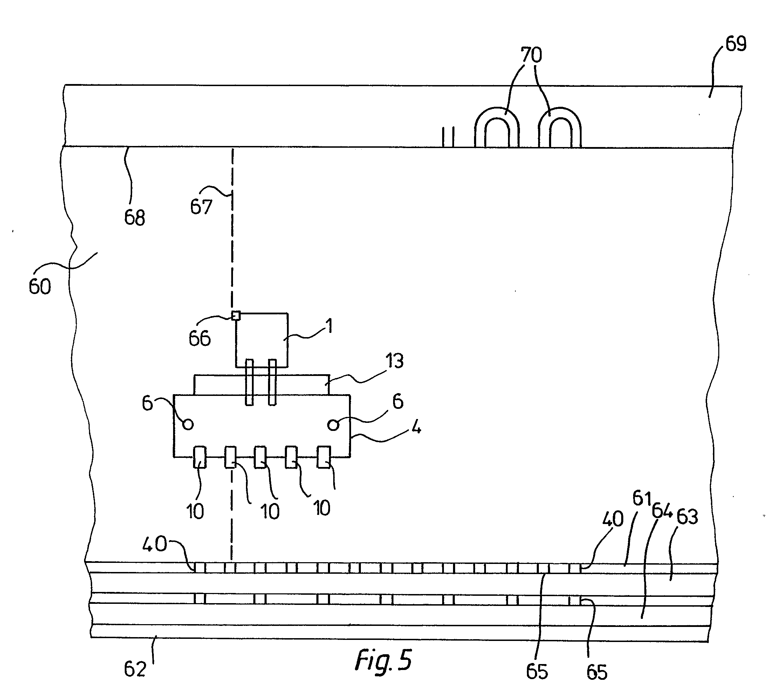

Fig.4 zeigt eine Ansicht der vibrationsfreien Verbindungsmittel zwischen dem zu verlegenden Heizungsrohr 40 und dem Befestigungsteil 28 des Maulwurfkörpers 11. Diese Verbindungsmittel enthalten eine Kette 30, die mit den vorstehend beschriebenen Befestigungsmitteln an dem Befestigungsteil 28 angebracht ist, und einen Stahlpfropfen oder ein Stahlrohr 31, dessen Außendurchmesser an den Innendurchmesser des Heizungsrohres 40 angepaßt ist. Das Stahlrohr 31 ist an einem Ende 32 mit einem Endglied 33 der Kette 30 zum Beispiel durch Schweißen fest verbunden. Das andere Ende 34 des Stahlrohres 31 wird in das Heizungsrohr 40 eingeführt und ist mit einer Durchbohrung 35 versehen, die zu einer entsprechenden Durchbohrung 41 im Heizungsrohr 40 ausgerichtet ist. Die Befestigung des Heizungsrohres 40 an dem Stahlrohr 31 erfolgt durch einen nicht dargestellten Bolzen, der die Durchbohrungen 35 und 41 durchsetzt und mit einer konventionellen Antivibrationsmutter gesichert ist. Das Stahlrohr 31 ist außenseitig im Bereich zwischen der Durchbohrung 35 und dem einen Ende 32 mit aufgeschweißten Abnutzungsstreifen 36 versehen.

Die Arbeitsweise der vorstehend beschriebenen Zugvorrichtung 2 wird nachfolgend anhand von Fig.5 im Zusammenhang mit der Verlegung von Heizungsrohren 40 unter einer Rasenfläche 60 beschrieben. An einem Rand 61 der Rasenfläche 60 wird ein Graben 62 ausgehoben, in dem eine Zuflußleitung 63 und eine Abflußleitung 64 der Heizung verlegt werden, die jeweils mit Heizungsrohranschlüssen 65 versehen sind. Jeweils eine vorgegebene Anzahl von zum Beispiel fünf Heizungsrohren 40 werden über fünf Maulwurfanordnungen 10 an der Zugvorrichtung 2 befestigt, und der Rahmen 4 wird mittels der Tiefeneinstellvorrichtungen 6 auf die vorgeschriebene Arbeitstiefe eingestellt.

Anschließend werden die Heizungsrohre 40 in der vorgesehenen Arbeitstiefe durch das Erdreich gezogen, wobei die Verlegung der Heizungsrohre 40 parallel und in einem vorgegebenen seitlichen Abstand erfolgt. Die Verlegung wird durch die Betätigung der Vibrationseinrichtung 12 erleichtert, wobei die vorlaufenden Schneidräder 8 die Beschädigung der Rasenfläche auf ein Minimum beschränken. Zweckmäßigerweise wird die Zugmaschine 1 während des Verlegungsvorganges mit Hilfe eines Richtungsweisers 66 entlang einem geradlinig gespannten Seil 67 geführt, wodurch eine geradlinige Verlegung und Ausrichtung der verlegten Heizungsrohre 40 sichergestellt wird.

Am gegenüberliegenden Rand 68 der Rasenfläche 60 ist ein weiterer Graben 69 ausgehoben, der verbindende Rohrschleifen 70 zwischen den Enden benachbarter Heizungsrohre 40 aufnimmt. Kurz vor Erreichen des weiteren Grabens 69 wird der Rahmen 4 angehoben, so daß die Heizungsrohre 40 von den zugehörigen Maulwurfanordnungen 10 gelöst und weiter von Hand verlegt werden können. Dadurch lassen sich größere Brüche in der Grabenkante sicher vermeiden. Benachbarte Heizungsrohre 40 werden dann in üblicher Weise durch die Rohrschleifen 70 miteinander verbunden, und die entgegengesetzten Enden der Heizungsrohre 40 werden mit der Zuflußleitung 63 bzw. Abflußleitung 64 verbunden. Anschließend werden die Gräben 62 und 69 wieder zugeschüttet. Es empfiehlt sich, die nach der Verlegung der Heizungsrohre 40 leicht gewellte Rasenfläche 60 so bald wie möglich zu rollen, wodurch die Rasenfläche 60 wieder vollständig und bleibend eingeebnet wird.

**Ansprüche**

1. Verfahren zur unterirdischen Verlegung von Heizungsrohren, dadurch gekennzeichnet, daß mindestens ein Heizungsrohr vibrationsfrei mit mindestens einer Maulwurfanordnung einer Zugvorrichtung verbunden wird, daß dei mindestens eine Maulwurfanordnung auf eine vorbestimmte Verlegungstiefe des zugehörigen Heizungsrohrs eingestellt wird und daß mittels Zugvorrichtung die mindestens eine auf die Verlegungstiefe voreingestellten Maulwurfanordnung und das zugehörige Heizungsrohr mit einer Zugmaschine durch das Erdreich gezogen werden.

2. Verfahren nach Anspruch 1, dadurch gekennzeichnet, daß eine vorgegebene Anzahl von Heizungsrohren parallel zueinander mit jeweils einer Maulwurfanordnung der Zugvorrichtung verbunden wird und die Heizungsrohre gleichzeitig parallel zueinander durch das Erdreich gezogen werden.

3. Verfahren nach Anspruch 1 oder 2, dadurch gekennzeichnet, daß jedes Heizungsrohr über eine Kette vibrationsfrei mit der zugehörigen Maulwurfanordnung verbunden wird.

4. Verfahren nach einem der Ansprüche 1 bis 3, dadurch gekennzeichnet, daß jede Maulwurfanordnung während der Verlegung der Heizungsrohre Vibrationen ausgesetzt wird.

5. Verfahren nach einem der vorstehenden Ansprüche, dadurch gekennzeichnet, daß an einem von gegenüberliegenden Rändern der Fläche unter der die Heizungsrohre verlegt werden, ein Graben ausgehoben wird, in dem mindestens eine Zuflußleitung und mindestens eine Abflußleitung verlegt werden und von dem ausgehend die Heizungsrohre durch das Erdreich gezogen werden, daß am gegenüberliegenden Rand ein weiterer Graben ausgehoben wird und daß jeweils zwei benachbarte, in den weiteren Graben vorstehende freie Enden von zwei benachbart unterirdisch verlegten Heizungsrohren miteinander verbunden werden.

6. Verfahren nach Anspruch 5, dadurch gekennzeichnet, daß die Maulwurfanordnung kurz vor Erreichen des weiteren Grabens aus dem Erdreich hochgezogen und die restliche Länge des Heizungsrohres von Hand verlegt wird.

7. Verfahren nach einem der Ansprüche 1 bis 6, dadurch gekennzeichnet, daß jeder Maulwurfanordnung ein vorlaufendes Schneidrad zugeordnet wird, das während der Verlegung des Heizungsrohre in eine obere Schicht des Erdreichs bis in eine voreinstellbare Schneidtiefe einschneidet.

8. Verfahren nach einem der vorstehenden Ansprüche, dadurch gekennzeichnet, daß die Zugmaschine während der Verlegung der Heizungsrohre geradlinig geführt wird.

9. Vorrichtung zur unterirdischen Verlegung von Heizungsrohren, gekennzeichnet durch eine an eine Zugmaschine (1) ankoppelbare Zugvorrichtung (2) mit mindestens einer Maulwurfanordnung (10), die vibrationsfrei mit einem Ende mindestens eines zu verlegenden Heizungsrohres (40) verbindbar ist, und eine Tiefeneinstellvor richtung (6) zur Einstellung der mindestens einen Maulwurfanordnung (10) auf die Verlegungstiefe des zugehörigen Heizungsrohres (40).

10. Vorrichtung nach Anspruch 9, dadurch gekennzeichnet, daß die mindestens eine Maulwurfanordnung (10) von einer Mehrzahl von parallel zueinander angeordneten Maulwurfanordnungen (10) gebildet ist.

11. Vorrichtung nach Anspruch 9 oder 10, dadurch gekennzeichnet, daß die Zugvorrichtung (2) eine Vibrationsvorrichtung (12) trägt, durch welche die mindestens eine Maulwurfanordnung (10) zu Vibrationen anregbar ist.

12. Vorrichtung nach einem der Ansprüche 9 bis 11, dadurch gekennzeichnet, daß zur vibrationsfreien Verbindung zwischen jeder Maulwurfanordnung (10) und dem zugehörigen Heizungsrohr (40) ein mit dem Heizungsrohr (40) fest, aber lösbar verbundener Stahlpfropfen (31) und eine Kette (30) vorgesehen sind.

13. Vorrichtung nach Anspruch 12, dadurch gekennzeichnet, daß der Stahlpfropfen (31) der Weite des Heizungsrohres (40) angepaßt und an dem Ende des Heizungsrohres (40) mittels eines durchgehenden Bolzens gehaltert ist, der mit einer Antivibrationsmutter gesichert ist.

14. Vorrichtung nach Anspruch 13, dadurch gekennzeichnet, daß der Stahlpfropfen (31) außenseitig mit aufgeschweißten Abnutzungsstreifen (36) versehen ist.

15. Vorrichtung nach einem der Ansprüche 9 bis 14, dadurch gekennzeichnet, daß jede Maulwurfanordnung (10) einen schneidenförmig ausgebildeten Maulwurfträger (20) auf weist, der an einem unteren Ende einen Maulwurfkörper (11) trägt und mit einem oberen Ende an der Zugvorrichtung (2) befestigt ist, daß der schneidenförmige Maulwurfträger (20) ein in Laufrichtung der Zugvorrichtung (2) von dem Maulwurfkörper (11) unter einem Windel nach vorn und oben verlaufendes Vorderteil (21) enthält, das mit einer vorderen Schneidkante (22) versehen ist und daß an dem schneidenförmigen Maulwurfträger (20) in Laufrichtung hinter dem Maulwurfkörper (11) eine Befestigungseinrichtung (28) zur Befestigung der mit dem Maulwurfkörper (11) verbundenen Kette (30) vorgesehen ist.

16. Vorrichtung nach Anspruch 15, dadurch gekennzeichnet, daß der Maulwurfträger (20) im Bereich der Schneidkante (22) mit aufgeschweißten Abnutzungsstreifen (23) versehen ist.

17. Vorrichtung nach einem der Ansprüche 9 bis 16, dadurch gekennzeichnet, daß die Zugvorrichtung (2) einen über die Tiefeneinstellvorrichtung (6) auf Rädern (5) abgestützten Rahmen (4) enthält, an dem die mindestens eine Maulwurfanordnung (10) angebracht ist.

18. Vorrichtung nach Anspruch 17, dadurch gekennzeichnet, daß die Zugvorrichtung (2) in Laufrichtung vor der mindestens einen Maulwurfanordnung (10) in ihrer Arbeitstiefe voreinstellbare Schneidräder (8) aufweist.

Fig.1

Fig. 2

Fig. 4

EP 0 303 085 A2

Fig.3

Fig. 5

EP 0 303 085 A2